# EUROPEAN PATENT SPECIFICATION

(11) **EP 3 068 737 B1**
(45) Date of publication and mention of the grant of the patent: **24.11.2021**
(21) Application number: 14737341.9
(22) Date of filing: 12.03.2014
(51) Int. Cl.: C03C 3/078, C03C 3/087, C03C 4/08

(54) **PRIVACY GLASS HAVING LOW INFRARED TRANSMITTANCE**
PERSONALISIERTE BRILLE MIT GERINGER INFRAROTDURCHLÄSSIGKEIT
VERRE OPAQUE À BASSE TRANSMITTANCE DES INFRAROUGES

(30) Priority: 16.11.2013 TR 201313331
(43) Date of publication of application: 21.09.2016
(73) Proprietor: Türkiye Sise Ve Cam Fabrikalari A.S., 34947 Tuzla (TR)
(72) Inventor: Akmaz, Fehiman, 34330 Istanbul (TR)
(74) Representative: Kaya, Erdem
(86) International application number: PCT/TR2014/000070
(87) International publication number: WO 2015/072938

(56) References cited:
- US-A- 4 104 076
- US-A- 5 346 867
- US-A- 5 393 593
- US-A1- 2001 011 057
- US-A1- 2004 186 001
- US-B1- 6 413 893
- US-E1- R E37 514

## Description

### TECHNICAL FIELD

The present invention relates to dark colored glasses and preferably grey colored glasses having low visible and infrared transmission preferably in order to be used in sunroofs of vehicles.

### PRIOR ART

The roofs of vehicles having sunroof are made of glass, and these glasses are called "privacy glass" in the literature. These glasses, preferably provided in the ceiling section of vehicles, shall be light-proof and heat-proof for driver and passenger health particularly during long-term voyages. Since the privacy glasses are light-proof and heat-proof, in obtaining such glasses, color agents are used having absorption both in the visible region and in the infrared region. In order to colorize the glass, various oxides are added to the batch. One of the most frequently used oxides in coloring is the iron oxide. The iron oxide can be in the form of Fe⁺² and Fe⁺³ in the glass.

Iron is provided in Fe⁺² (ferrous) and Fe⁺³ forms in soda-lime glasses. Fe⁺² provides blue green color to the glass and Fe⁺³ provides yellow green color to glass. Fe⁺² has a strong heat absorption centered at 1050 nm wavelength in the infrared region. Therefore, when the amount of iron oxide used is greater and when the glass is more reducer, the IR transmittance value becomes lower. Thus, since the portion of iron transformed into the Fe⁺² form at high temperatures is high, the heat transfer to the bottom layers of the glass melted in the furnace is prevented more; thus, this leads to an increase in the temperature difference between the glass surface and the depths thereof. This leads to problems in the production conditions. Due to the increasing difference, the base of the glass in pluralities of regions of the furnace, and particularly in the function pool is cooled in an excessive manner, and the glass quality is affected by the cold glass formation and by the crystallization occurring due to this problem.

In the invention with publication number EP0734358, a neutral gray, heat absorbing soda-lime-silica glass having at 4 mm. control thickness a visible transmittance using illuminant A of 10.0% to 55.0%, ultra violet transmittance less than 25.0%, and infra red transmittance is less than about 50.0% produced with colorants consisting of 0.90 to 1.90 % by weight total iron oxide as Fe2O3, 0.002 to 0.025 % Co, 0.0010 to 0.0060 % Se, 0.10 to 1.0 % MnO2, and 0 to 1.0 % TiO2. The flat glass product having such a composition is particularly suitable for use as a privacy glass or sun roof product in trucks and automobiles.

In the invention with publication number US6455452, the glass includes a colorant portion having 0.7 to 2.2 % by weight Fe₂O₃, 0-0.010 % CoO, 0.0003-0.0100 % Se. Said glass is bronze colored and provides a luminous transmittance of up to 60 % in 4 mm thickness.

In the invention with publication number EP1680371 there are coloring elements of Fe₂O₃, CoO, Selenium, MnO₂ and Cr₂O₃ % 0.0025 - 0.0100 in weight. Said glass visible and solar transmittance value is lower than 20 % at a thickness of 4 mm. The usage of Cr₂O₃ as colorant has disadvantage since Cr₂O₃ has high absorbance property in infrared region at high temperature. This is an undesired case in furnace conditions. Additionally, since the Cr₂O₃ melting temperature is high, chrome defects occur in the glass.

In the invention with publication number EP1125899, the glass comprises 1 to 1.6 % in weight Fe₂O₃; 0.019-0.05 % CoO; 0.0001-0.0030 % Se and 0.05-0.1 % nickel oxide. Said glass has a thickness between 1.8 mm and 5 mm and a visible transmittance and solar energy transmittance in a range from 5 to 25 %, and an ultraviolet transmittance not greater than 15%.

### BRIEF DESCRIPTION OF THE INVENTION

The present invention relates to privacy glasses used in vehicle sunroofs, for eliminating the above mentioned disadvantages and for bringing new advantages to the related technical field.

The main object of the present invention is to provide a glass whose close infrared transmission value is decreased as from claim 4.

Another object of the present invention is to provide a glass whose visible and UV transmission are low.

Another object of the present invention is to provide a glass which is grey-colored.

In order to realize all of the above mentioned objects and the objects which are to be deducted from the detailed description below, the present invention is a dark-colored privacy glass having thickness in range of 2 mm - 6 mm and having low transmission preferably for use in vehicles and comprising the following main components in weight:
69-75 % SiO₂
10-20 % Na₂O
5-15 % CaO
3.5-5 % MgO
0-5 % Al₂O₃
0-5 % K₂O
and comprising the following colorants in weight:
1.4 % Fe₂O₃
20-25 ppm selenium
0.3 - 0.5 kg/100 kg glass NaNO₃
**characterized** in that said dark-colored privacy glass comprises CoO within 100 - 250 ppm for increasing absorbance and for decreasing transmission value in the infrared region. and obtained by the method of claim 1. Thus, by means of CoO addition, the temperature difference between the glass surface and the inner portion thereof is prevented from increasing, and the glass becomes pinkish colored by means of Se addition.

In a preferred embodiment of the subject matter invention, the transmission value (Tir) of said dark colored privacy glass in the infrared region is minimum 3 % and maximum 25 %. Thus, the passage of infrared rays through the glass is decreased, and the air-conditioning load of automobile, etc. is decreased.

In another preferred embodiment of the subject matter invention, the transmission value (Tir) of said dark colored privacy glass in the infrared region is minimum 3 % and maximum 14.

In another preferred embodiment of the subject matter invention, the visible transmisison value (Tv) of said dark colored privacy glass is minimum 8 % and maximum 40 %.

In another preferred embodiment of the subject matter invention, the visible transmission value (Tv) of said dark colored privacy glass is minimum 8 % and maximum 25 %.

In another preferred embodiment of the subject matter invention, the solar transmission (Te) value of said dark colored privacy glass is minimum 5 % and maximum 31 %. Thus, it decreases the amount of energy used for cooling the ambient by transmitting the sunlight in a lesser manner.

In another preferred embodiment of the subject matter invention, the solar transmission (Te) value of said dark colored privacy glass is minimum 5 % and maximum 17 %.

In another preferred embodiment of the subject matter invention, the amount of NaNO₃ in the batch providing 100 kg dark colored privacy glass is 0.3 kg. Thus, the selenium retention in the glass is increased.

In another preferred embodiment of the subject matter invention, the L value is maximum 62 % and minimum 48 %.

In another preferred embodiment of the subject matter invention, value a is maximum -3 and minimum -7.

In another preferred embodiment of the subject matter invention, value b is maximum 20 and minimum 3.

In another preferred embodiment of the subject matter invention, the present invention is a grey-colored glass.

### THE DETAILED DESCRIPTION OF THE INVENTION

In this detailed description, the subject matter dark colored special glass (called "privacy glass" in literature) is explained with references to examples without forming any restrictive effect in order to make the subject more understandable.

In this section, the preferred application of the present invention is described by providing the percent ratios of each component in weight. At the same time, the transmission values according to EN 410 standards and the color values according to ASTM 308-2008 standards are given for glasses with thickness of 2-6 mm.

The subject matter dark colored privacy glass comprises the main components which can be added into the batch and which can be brought into the final product by means of heat process and whose percent ratios in weight are given in Table 1.

**Table 1: Glass composition**

| **Component** | **Weight %** |
|---|---|
| SiO₂ | 69-75 |
| Na₂O | 10-20 |
| CaO | 5-15 |
| MgO | 3,5-5 |
| Al₂O₃ | 0-5 |
| K₂O | 0-5 |

The subject matter dark colored privacy glass, preferably used in automobiles and in architecture sector and obtained by means of experimental melting, is a glass application having low optical properties and whose cost is low. In this application, the usage amount of iron oxide is decreased in weight, and the usage amount of CoO in weight is increased. The increasing CoO amount has shown surprising effect on the color and optical properties of the produced glass, and has led to decrease in transmission in the visible region of glass and particularly in the infrared region of glass.

Sulphate, carbon and nitrate can also be provided in the glass as auxiliary additives. Sodium sulphate in the glass batch provides solid batch particles to be dissolved in a rapid manner during melting of the raw materials inside the furnace, and also provides the reaction gases to be diverged from the ambiance in an easy manner. Thanks to this function, sulphate is also defined as affined agents.

Impurity entry into the glass batch from the ambient and / or from the other raw materials is being avoided. Sodium nitrate (NaNO₃) oxides the organic component, existing as impurities, into the batch during melting of the glass, and prevents the impurities from reducing the iron oxide in the glass. At the same time, sodium nitrate accelerates melting. In the preferred application, NaNO₃ amount is used at an amount of 0.3 kg for 100 kg glass.

In the subject matter glass batch, iron, cobalt and selenium are used as the colorant material in order to provide the desired optical properties. Iron is added to the batch as iron oxide; cobalt is added as cobalt oxide and selenium is added as zinc selenite.

Only iron oxide, cobalt oxide, sodium nitrate and selenium, whose exact amounts are given in Table 2, are doped into the glass batch as colorant.

**Table 2: Colorant agents**

| **Component** | **Amount** |
|---|---|
| % (In weight) Fe₂O₃ (in the glass) | 1,4 |
| CoO (ppm)(in the glass) | 100-250 |
| Selenium(ppm)(in the glass) | 20-25 |
| NaNO₃(in the batch) (kg/100kgcam) | 0,3-0,5 |
| Anthracite (in the batch) (kg/100kgcam) | 0,020 |

The glass, obtained by using the above mentioned raw materials, is grey colored and has low transmission property. Selenium addition to the glass batch provides the transmission of the glass, the final product, to be decreased. The melting point of selenium providing pink color to the soda-lime-silica glasses by means of the absorption band centered at 490 nm wavelength in neutral or slightly oxidant conditions is 217 °C, the boiling point thereof is 685 °C and therefore, 70-90 % of selenium given to the furnace together with the batch is vaporized.

Since the furnace atmosphere is excessively reduced, this will lead to formation of selenide complex giving undesired brownish pink color to glass, and therefore, this has to be taken into consideration. The increases in the sulphate amount added to the batch as affination agent decrease selenium retention. As the amount of selenium in the batch decreases, this has a negative effect particularly on the transmission and color of glass which are among the desired optical properties. Thus, the amount of selenium added to the batch shall be at optimum value.

In the studies realized, 3 different amounts of CoO are added, namely 100 ppm, 200 ppm and 250 ppm, to the glass batch in order to measure the effect of CoO amount on the Tir % transmission value of glass. In order to calculate the standard deviations which may result from production and/or ambient conditions, production trials are realized in the form of 3 separate series, and the infrared transmission values are calculated.

The batch, prepared based on the amounts given in Table 1 and Table 2, are melted in glass furnace for duration of 3 hours in electrical furnaces at 1450 °C inside porcelain crucibles and they are annealed at 550 °C and glass of 4 mm thickness is prepared. During the melting process, the redox and iron oxide (1.4 %) proportions of glasses are kept fixed, the CoO amounts are changed and the infrared transmission values are measured. Thus, it is observed that the increase in CoO decreases IR transmission. The results obtained are given in Table 3.

**Table 3: Infrared transmission values for changing CoO amounts (4 mm)**

| | **100 ppm CoO** | **200 ppm CoO** | **250 ppm CoO** |
|---|---|---|---|
| **Tir % (series 1)** | 9.70 | 8.18 | 7.90 |
| **Tir % (series 2)** | 12.20 | 8.55 | 7.21 |
| **Tir % (series 3)** | 10.22 | 9.21 | 8.38 |

Tir % values are calculated according to EN410 standard by realizing measurement in the range of 780-2500 nm wavelength in the PE Lambda 950 UV-VIS-NIR spectrometer.

Cobalt provides blue color to the glass, and shows the strongest absorption in the visible region wavelength range of 530 nm-590 nm and 650 nm. The solar transmission is measured in the range of 350-2500 nm, and since this range also comprises the visible region, the % solar transmission values of glasses comprising oxides having strong absorption in the visible region like CoO are low. Thus, the increase in CoO decreases the visible transmission and solar transmission of glass. Generally, it is observed that in the present invention, the CoO, used for decreasing visible region absorption and for coloring, decreases the visible region absorption and decreases the close infrared region absorption which is within the 780 - 2500 nm range. Moreover, since the heat absorption of cobalt oxide used as colorant at high temperatures is low, there occurs no problem in the furnace during production. Besides, Co is provided in valence of +2 in glass, and is not affected by production and redox conditions. Thus, CoO has an important effect on the stability of color.

It is shown that CoO decreases the visible and solar transmission values as it is observed that the average solar and visible transmission values are changing depending on the increasing CoO proportion for glass with 4 mm thickness as given in Table 4.

**Table 4: Average solar and visible transmission values**

| | **100 ppm CoO** | **200 ppm CoO** | **250 ppm CoO** |
|---|---|---|---|
| **Tv % (series 1)** | 20.7 | 22.4 | 17.8 |
| **Tv % (series 2)** | 30.2 | 17.5 | 17.0 |
| **Tv % (series 3)** | 27.4 | 18.5 | 17.8 |
| **Te % (series 1)** | 13.1 | 13.9 | 11.8 |
| **Te % (series 2)** | 18.9 | 11.8 | 11.2 |
| **Te % (series 3)** | 16.4 | 12.4 | 12.0 |

Decrease of the iron oxide amount and increase of the CoO amount in the glass batch provide prevention of temperature difference increase occurring between the glass surface and depths due to the high iron amount used in the glass batch inside the furnace; and provide obtaining low IR transmission thanks to the absorption of CoO in the infrared region. Thus, by means of decreasing the iron oxide amount and increasing the CoO amount, the over-cooling of the glass base in pluralities of regions of the furnace is prevented and the crystallization problem is prevented.

As can be seen in a clear manner from Table 3 and Table 4, as CoO increases, transmission decreases. In the presence of 250 ppm CoO, the change of the visible transmission, solar transmission, ultraviolet transmission and infrared transmission depending on the glass thickness is given in Table 5.

**Table 5: Transmission values of glass with different thicknesses in the presence of 250 ppm CoO**

| **Thickness** | **2 mm** | **3 mm** | **4 mm** | **5 mm** | **6 mm** |
|---|---|---|---|---|---|
| T**v %** | 40 | 26.4 | 17.5 | 11.6 | 7.7 |
| **Te %** | 31 | 18.8 | 11.6 | 7.3 | 4.6 |
| **Tir %** | 24.7 | 13.6 | 7.8 | 4.6 | 2.9 |
| **Tuv %** | 8.2 | 3.5 | 1.5 | 0.7 | 0.3 |

The average color coordinate values of experiment sample dark colored privacy glass with 4 mm thickness prepared in the proportions given in Table 1 and Table 2 as a result of the measurements realized are as follows:

**Table 6: The comparison table for the average L-a-b values**

| **Definition of the Sample** | **Standart Thickness (mm)** | **L** | **a** | **b** |
|---|---|---|---|---|
| 100 ppm CoO | 4 | -58 | ∼(-4,56) | ∼15,89 |
| 200 ppm CoO | 4 | -51 | ∼(-6,17) | ∼7,9 |
| 250 ppm CoO | 4 | -49 | ∼(-7,02) | ∼3,56 |

L*a*b* values are given according to the ASTM 308-2008 standards for glasses with thickness of 4 mm. L*a*b values are calculated from Tristimulus values. The color location of the present color in this system is determined in the three dimensional Cartesian coordinate system. "a" represents greenness (-a), redness (+a); "b" represents blueness (-b), yellowness (+b).

In the measurements realized, L value in the glass samples comprising 100 ppm CoO is obtained as maximum 61.8 and minimum 52.6, L value in glass samples comprising 200 ppm CoO is maximum 54.5 and minimum 49.0, L value in glass samples comprising 250 ppm CoO is maximum 49.2 and minimum 48.3.

In said glass samples, value a is obtained as equal to maximum -3.085 and minimum -5.78 in glass samples comprising 100 ppm CoO, value a is obtained as equal to maximum -4.84 and minimum -8.25 in glass samples comprising 200 ppm CoO, value a is obtained as equal to maximum -6.82 and minimum -7.31 in glass samples comprising 250 ppm CoO.

In a similar manner, value b is obtained as equal to maximum 20.30 and minimum 12.91 in glass samples comprising 100 ppm CoO, value b is obtained as equal to maximum 10.83 and minimum 2.18 in glass samples comprising 200 ppm CoO, value b is obtained as equal to maximum 4.48 and minimum 2.64 in glass samples comprising 250 ppm CoO.

The blueness of the glass color increases as the cobalt amount increases and at the same time, brightness % of the glass decreases.

The protection scope of the present invention is set forth in the annexed claims and cannot be restricted to the illustrative disclosures given above, under the detailed description. It is because a person skilled in the relevant art can obviously produce similar embodiments under the light of the foregoing disclosures.

## Claims

1. Production method of a dark colored special glass having thickness in range of 2 mm - 6 mm and having low transmittance preferably for use in vehicles, **wherein** the following main components are added by weight to the glass mixture: 69-75% SiO₂; 10-20% Na₂O; 5-15% CaO; 3.5-5% MgO; 0-5% Al₂O₃; 0-5% K₂O;
and the following components are added by weight as colorant: 1.4% Fe₂O₃;
20-25 ppm selenium;
CoO is added in range of 100 - 250 ppm and 0.3-0.5 kg/100kg NaNO₃ is added into the batch during melting of the glass for decreasing transmittance value and for increasing absorption in the infrared region.

2. The dark colored glass production method according to Claim 1, **wherein** 0.3 kg/100kg glass NaNO₃ is added into the batch during melting of the glass.

3. The dark colored glass production method according to Claim 1, **wherein** 0.2 kg/100kg glass anthracite is added to the mixture.

4. Dark colored glass obtained by means of the method given in any preceding claims.

5. The dark colored glass according to Claim 4, **wherein** said glass is a grey colored glass.

## Patentansprüche

1. Verfahren zur Herstellung eines dunkel gefärbten Spezialglases mit einer Dicke im Bereich von 2 mm bis 6 mm, das über eine niedrige Durchlässigkeit verfügt und vorzugsweise für den Einsatz in Fahrzeugen bestimmt ist, wobei der Glasmischung als Hauptkomponente 69-75 Gew.-% SiO₂; 10-20 Gew.-% Na₂O; 5-15 Gew.-% CaO; 3.5-5 Gew.-% MgO; 0-5 Gew.-% Al₂O₃; 0-5 Gew.-% K₂O zugesetzt werden; wobei als Farbstoff folgende Komponente beigefügt werden: 1.4 Gew.-% Fe₂O₃; 20-25 ppm Selen; und
wobei beim Schmelzen des Glases für eine verminderten Durchlässigkeitsgrad und eine gesteigerte Absorption im Infrarotbereich der Glasmasse CoO im Bereich von 100 bis 250 ppm sowie NaNO₃ in einer Menge von 0.3-0.5 kg/100kg beigefügt wird.

2. Verfahren zur Herstellung von dunkel gefärbtem Glas nach Anspruch 1, wobei beim Schmelzen des Glases der Glasmasse NaNO₃ in einer Menge von 0.3 kg/100kg Glas beigefügt wird.

3. Verfahren zur Herstellung von dunkel gefärbtem Glas nach Anspruch 1, **wobei** der Mischung Anthrazit in einer Menge von 0.2 kg/100kg Glas beigefügt wird.

4. Dunkel gefärbtes Glas, hergestellt durch das Verfahren nach einem der vorhergehenden Ansprüche.

5. Dunkel gefärbtes Glas nach Anspruch 4, **wobei** das Glas ein grau gefärbtes Glas ist.

## Revendications

1. Méthode de production d'un verre spécial de couleur foncée ayant une épaisseur comprise entre 2 mm et 6 mm et ayant une faible transmittance 5, de préférence pour une utilisation dans des véhicules, dans lequel les composants principaux suivants sont ajoutés en poids au mélange de verre: 69-75% SiO₂; 10-20% Na₂O; 5-15% CaO; 3.5-5% MgO; 0-5% Al₂O₃; 0-5% K₂O;
et les composants suivants sont ajoutés en poids comme colorant: 1.4% Fe₂O₃; 20-25 ppm sélénium; 10 CoO est ajouté dans une plage de 100 à 250 ppm et 0,3 à 0,5 kg/100 kg de NaNO est ajouté au lot pendant la fusion du verre pour diminuer la valeur de transmission et augmenter l'absorption dans la région infrarouge.

2. Méthode de fabrication de verre de couleur foncée selon la revendication 1, **dans lequel** 0,3 kg/100 kg de verre NaNO₃ est ajouté au lot pendant la fusion du verre.

3. Méthode de production de verre de couleur foncée selon la revendication 1, **dans lequel** 0,2 kg/100 kg d'anthracite de verre sont ajoutés au mélange.

4. Verre de couleur foncée obtenu au moyen de la méthode donnée dans l'une quelconque des revendications précédentes.

5. Verre de couleur foncée selon la revendication 4, **dans lequel** ledit verre est un verre de couleur grise.
